# EUROPÄISCHE PATENTSCHRIFT

(11) **EP 2 274 590 B1**
(45) Veröffentlichungstag und Bekanntmachung des Hinweises auf die Patenterteilung: **29.05.2013**
(21) Anmeldenummer: 09737735.2
(22) Anmeldetag: 28.04.2009
(51) Int. Cl.: G01M 17/007, G01L 3/16

(54) **ROLLENPRÜFSTAND FÜR KRAFTFAHRZEUGE**
ROLLER-TYPE TEST STAND FOR MOTOR VEHICLES
BANC D'ESSAI À ROULEAUX POUR DES VEHICULES MOTORISES

(30) Priorität: 02.05.2008 DE 102008021945
(43) Veröffentlichungstag der Anmeldung: 19.01.2011
(73) Patentinhaber: MAHA-AIP GmbH & Co. KG, 87490 Haldenwang (DE)
(72) Erfinder: KNESTEL, Anton, 87496 Hopferbach (DE); KÜCHLE, Jürgen, 87496 Hopferbach (DE)
(74) Vertreter: MERH-IP Matias Erny Reichl Hoffmann
(86) Internationale Anmeldenummer: PCT/DE2009/000585
(87) Internationale Veröffentlichungsnummer: WO 2009/132627

(56) Entgegenhaltungen:
- EP-A2- 1 484 593
- AT-B- 387 112
- DE-A1- 2 809 453
- DE-A1- 19 900 620
- US-A- 5 452 605
- US-A- 5 522 257

## Beschreibung

Die Erfindung betrifft einen Rollenprüfstand für Kraftfahrzeuge mit Federstützen, wobei die Federstützen Biegestellen aufweisen, die schmiermittel- und verschleißfrei ausgeführt sind. Dadurch kann ein Rollenprüfstand realisiert werden, der hochgenaue Messergebnisse mit einer sehr geringen Hysterese liefert. Der Rollenprüfstand kann für zwei- oder mehrachsige Fahrzeuge Verwendung finden, wobei einer Achse eine Laufrolle oder zwei Laufrollen zugeordnet sein können. Bei mehrachsigen Fahrzeugen kann der Abstand der Laufrollen beziehungsweise der Laufrollenpaare an die unterschiedlichen Achsabstände des Fahrzeugs angepasst werden.

Es sind Prüfstände mit sogenannten Singlerollen bekannt, bei denen das Fahrzeugrad in einem Rollenscheitel abrollt. Weiterhin sind Doppelrollenpritfstände bekannt, bei denen das Fahrzeugrad in einem Rollenprisma zwischen den beiden Laufrollen des Prüfstands aufsteht. Bei all diesen Prüfständen ist darauf zu achten, dass die prüfstandseigenen Verluste möglichst gering gehalten werden. Weiterhin sind bei solchen Prüfständen Messmittel erforderlich, um die Lastaufnahme des Prüflings und die Zugkraftaufnahme oder -abgabe zu bestimmen.

Bei Trommelprüfständen kann hierbei zwischen der Antriebsmaschine und der Laufrolle eine sogenannte Drehmomentmesswelle eingefügt sein, die das aufgenommene beziehungsweise abgenommene Drehmoment M misst. Die vom Fahrzeug abgegebene Kraft F = M*1, wobei 1 der Radius der Prüfstandtrommel ist.

Eine bekannte Möglichkeit zur Messung dieser Kräfte ist der Einsatz von sogenannten Pendelmaschinen. Bei Pendelmaschinen wird das Gehäuse der Antriebs- beziehungsweise Bremseinheit nicht starr sondern um die Achse drehbar gelagert. Die Antriebsmaschine stützt sich dabei auf einer Kraftmessdose ab. Muss nun die Antriebsmaschine Drehmomente aufnehmen oder abgeben, versucht sie sich im Rahmen zu drehen. Durch die Kraftmessdose kann dieses Drehmoment erfasst und an eine Auswerteeinheit weitergegeben werden.

Die US-A-5452605 zeigt einen Trommelprüfstand, bei dem die Antriebsmaschine zwischen den beiden Lauftrommeln angeordnet ist und diese antreibt beziehungsweise abbremst. Als Nachteil ist hier zu nennen, dass die Pendellager (Wälzlager) während des Betriebs nicht bewegt werden, was zu einem hohen Verschleiß durch mangelnde Schmierung führen kann. Des Weiteren ist eine solche Lagerausführung nicht hysteresefrei.

Die US-A-5522257 zeigt eine Lösung dieses Problems dadurch, dass zwei unterschiedlich große Wälzlager ineinander kaskadiert angeordnet sind, so dass auch bei der stehenden Pendelmaschine die Mittelringe der Lagerung bewegt werden.

Die DE 19900620 A1 zeigt einen Prüfstand mit hydrostatischen Lagern. Dabei wird ein Statorgehäuse reibungsfrei auf Drucköltaschen gelagert. Die Drucköltaschen werden von einem Steuerelement mit einem Ölstrom versorgt, so dass ein Kontakt der metallischen Lagerteile vermieden wird. Neben dem technischen Aufwand ist hier das zu verwendende Tragöl und die Abdichtung der Lagerstellen als Schwierigkeit zu nennen. Hier ist auch eine reibungsfreie Lageranordnung beschrieben, wobei mehrere Blattfederelemente die Pendelmaschine tragen. Wechselnde Belastungen, zum Beispiel durch unterschiedlich schwere Fahrzeuge führen zur Dehnung beziehungsweise zur Stauchung der Blattfederelemente. Dies kann dazu führen, dass das jeweils untere Federelement gestaucht wird, wodurch sich ein Scheindrehmoment auf die Kraftmessdose ergibt. Des Weiteren können die Längenausdehnungen der Federelemente aufgrund von Temperaturänderungen oder Belastungsänderungen zu Scheindrehmomenten an der Kraftmessdosc führen.

Die EP A2-1 484 593 beschreibt einen Fahrzeugprüfstand mit vier Laufrollen, die mit einer Wechselstrommaschine, einem Drehzahlaufnehmer und einer Kraftmessvorrichtung verbunden sind.

Die DE-A1-28 09 453 beschreibt eine Pendelmaschine, die an ihren Enden über zwei Blattfederpaare am Fundament befestigt ist.

Es ist eine Aufgabe der Erfindung einen Rollenprüfstand für Kraftfahrzeuge zu schaffen, der hochgenaue Messergebnisse mit einer sehr geringen Hysterese ermöglicht.

Die Aufgabe wird gemäß den Merkmalen des unabhängigen Patenanspruchs gelöst. Die abhängigen Patentansprüche geben vorteilhafte Ausführungsformen und Weiterentwicklungen der Erfindung an.

Erfindungsgemäß ist ein Rollenprüfstand für Kraftfahrzeuge vorgesehen, mit zumindest einer Laufrolle für zumindest ein Rad eines Fahrzeugs, einer Antriebsmaschine zum direkten Antreiben der Laufrolle, wobei die Antriebsmaschine ein Statorgehäuse aufweist und/ oder einem Tragrahmen, in dem das Statorgehäuse pendelnd gelagert ist, wobei sich das Statorgehäuse über Messmittel an dem Tragrahmen abstützt. Das Statorgehäuse kann weiterhin über zumindest zwei Federstützen mit dem Tragrahmen verbunden sein, wobei die Federstützen jeweils zumindest eine Biegestelle aufweisen können.

Erfindungsgemäß kann ein Rollenprüfstand realisiert werden, der unabhängig von eingebrachten Störgrößen, wie beispielsweise das Fahrzeuggewicht oder eine Temperaturänderung annähernd hysteresefrei hochgenaue Messergebnisse liefern kann, wobei die prüfstandseigenen Verluste vernachlässigbar sind.

Die Biegestelle kann derart ausgebildet sein, dass ein Drehmoment bzw. eine Kraft in Verdrehrichtung des Statorgehäuses zu einer elastischen Verformung der Biegestelle führt, wobei die Biegestelle gegenüber anderen Kräften stabil ausgebildet sein kann.

Es können zwei Biegestellen vorgesehen sein, die im Befestigungsbereich der Federstützen vorgesehen sind, wobei es bei einem anliegenden Drehmoment zu einer S-artigen Verformung der beiden Biegestellen (der oberen und der unteren) kommen kann, d.h. die eine Biegestelle verformt sich in eine Richtung und die andere Biegestelle in eine andere entgegen gesetzte Richtung.

Die Verjüngung kann im Wesentlichen parallel zur Drehachse einer Welle der Antriebsmaschine angeordnet sein. Weiterhin können die Biegestellen nahe von Befestigungsstellen der Federstützen vorgesehen sein.

Die Biegestellen mit den Verjüngungen sind so angeordnet und ausgebildet, dass sich von der Antriebsmaschine aufgenommene oder abgegebene Drehmomente annähernd verlustfrei auf das Messmittel beziehungsweise die Kraftmessdose übertragen können.

Die Verjüngungen der Biegestellen können hierbei derart ausgelegt werden, dass eine ausreichende Zug- beziehungsweise Druckfestigkeit vorliegt um das Statorgehäuse zu tragen beziehungsweise zu stützen, wobei gleichzeitig eine ausreichende Biege- beziehungsweise Bewegungsmöglichkeit des Statorgehäuses und der Lagerstellen möglich ist.

Die Federstütze kann hierbei aus Metall gebildet sein, es sind jedoch auch andere Materialien oder Materialzusammensetzungen denkbar.

Die Biegestellen sind hierbei nahe den Befestigungsstellen der Federstütze einerseits an dem Tragrahmen und andererseits an den Statorgehäuse vorgesehen. Dadurch kann die Beweglichkeit des Statorgehäuses in Drehrichtung weiter optimiert werden.

Es können darüber hinaus noch zusätzliche Biegestellen mit entsprechenden Verjüngungen vorgesehen sein, um einen Längenausgleich der Antriebsmaschine in Axialrichtung zu ermöglichen. Dadurch können beispielsweise Längenausdehnungen der Antriebsmaschine bei enstprechenden Temperaturänderungen bewältigt werden, wobei es sich hierbei beispielsweise um den Längenausgleich der rechten zur linken Lagerstelle handeln kann.

Die zusätzlichen Biegestellen können im Wesentlichen tangential zur Drehrichtung der Welle angeordnet werden. Dadurch kann die Beweglichkeit der Federstützen bezüglich der Lagerstellen der Antriebsmaschine in Axialrichtung weiteroptimiert werden.

Die Messmittel beziehungsweise die Kraftmessdose kann hierbei 90° zu einer möglichen Störgröße beziehungsweise Störbewegung angeordnet sein, wobei nur Kräfte in Messrichtung aufgenommen werden können. Als mögliche Störgrößen kommen beispielsweise eine Längenänderung der Federstützen durch Temperaturänderungen oder eine Längenänderung der Federstützen durch eingebrachte Gewichtskräfte in Frage. Beispielsweise bei einer Längenänderung der Federstützen durch eine Temperaturänderung würden sich bei einer Temperaturerhöhung die Federstützen nach unten längen, wodurch sich die Welle der Antriebsmaschine entsprechend nach unten im 1/10-Millimeterbereich bewegen würde. Durch eine symmetrische Anordnung der Federstützen würde sich eine Störbewegung beziehungsweise eine Störgröße ergeben, die vertikal nach unten gerichtet wäre. Die Kraftmessdose wird bei einer 90°-Anordnung zu der vorgenannten Störgröße beziehungsweise Störbewegung keinerlei Scheindrehmomente messen. Das Messergebnis wird folglich durch eine Längenänderung der Federstützen nicht verschlechtert.

Der Querschnitt der Federstützen kann beispielsweise als ein Vierkantprofil ausgebildet sein. Natürlich können auch andere Profilgestaltungen von Vorteil sein. Die Verjüngungen sowohl der Biegestellen als auch der zusätzlichen Biegestellen können als Verjüngungsradius ausgebildet werden. Es sind jedoch auch andere Möglichkeiten denkbar, wobei einerseits eine zu große Materialschwächung zu vermeiden ist und andererseits eine Biegemöglichkeit in die gewünschte Richtung optimiert werden soll.

Die Federstützen können einen beliebigen Winkel zueinander aufweisen. Bevorzugt können die Federstützen symmetrisch zu der Vertikalachse in einer V-Form angeordnet werden.

Zur Optimierung der Messergebnisse können sich die Mittelachsen der beiden auf der jeweiligen Seite angeordneten Federstützen auf der Drehachse der Welle der Antriebsmaschine schneiden.

Die erfindungsgemäße Pendelmaschine kann an nur zwei in einem bestimmten Winkel zueinander stehenden Federstützen pro Seite abgestützt werden. Die Federstützen können hierbei hängend oder stehend ausgeführt sein. Die Federstützen können im Wesentlichen sehr stabil ausgeführt werden und verfügen lediglich an den Befestigungsstellen beziehungsweise nahe den Befestigungsstellen beziehungsweise im Befestigungsbereich über dünne in Drehrichtung wirkende Aussparungen beziehungsweise Verjüngungen. Wenn nun die Antriebsmaschine ein entsprechendes Drehmoment aufbringen muss, wird sie versuchen, sich gegenüber den Biegestellen der Federstützen zu verdrehen. Die an dieser Stelle gewollte Verdrehung wird jedoch durch die Kraftmessdose, welche die Pendelmaschine gegenüber dem Tragrahmen abstützt, verhindert. Werden nun unterschiedliche Traglasten aufgebracht, längen sich die Federstützen entsprechend. Gleiches kann bei entsprechenden Temperaturerhöhungen passieren. Damit diese Längenänderungen nicht zu einem Scheindrehmoment an der Kraftmessdose führen, wird die Angriffsrichtung beziehungsweise die Kraftmessrichtung 90° zur Winkelhalbierenden der Federstützen vorgesehen.

Die Kraftmessdose kann hierbei derart zwischen dem Statorgehäuse und dem Tragrahmen angeordnet sein, dass lediglich Kräfte in Messrichtung weitergeleitet werden.

Eine Seite der Pendelmaschine kann Federstützen aufweisen, die nur in Drehrichtung Biegestellen beziehungsweise Verjüngungen aufweisen, während die andere Seite Biegestellen mit Verjüngungen beziehungsweise Schwachstellen versehen ist, die hierzu um 90° gedreht sind. Dadurch kann ein Längenausgleich der Antriebsmaschine in Axialrichtung kompensiert werden.

Die vorgenannten Merkmale können in beliebiger Weise miteinander kombiniert werden.

Im Folgenden wird die Erfindung anhand von schematischen Zeichnungen beispielhaft näher erläutert. Es zeigen:
Figur 1 eine schematische Ansicht des Rollenprüfstands mit einer angeordneten Laufrolle,
Figur 2 eine Seitenansicht des Rollenprüfstands,
Figur 3 eine Ansicht des Rollenprüfstands mit einer unterhalb des Statorgehäuses angeordneten Kraftmessdose,
Figur 4 eine Ansicht des Rollenprüfstands von der zur Ansicht in Figur 1 anderen Seite und
Figur 5 eine Ansicht des Prüfstands mit beiden Laufrollen.

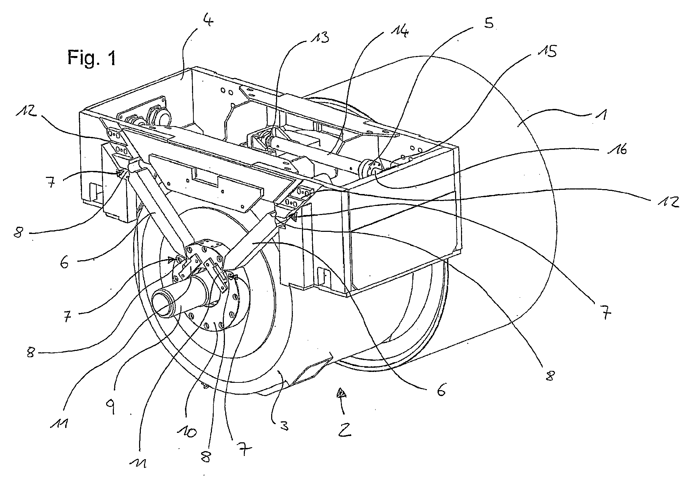

In der Figur 1 ist eine Laufrolle 1 dargestellt. Die Laufrolle 1 steht mit einer Welle 9 in Verbindung. Die Welle 9 steht in einer Antriebsverbindung mit einer Antriebsmaschine 2, wobei die Antriebsmaschine 2 ein Statorgehäuse 3 aufweist. Das Statorgehäuse 3 ist über Federstützen 6 gelagert. Die Federstützen 6 weisen Biegestellen 7 mit jeweiligen Verjüngungen 8 auf. Die Biegestellen 7 mit den Verjüngungen 8 sind in einem jeweiligen Befestigungsbereich der Federstütze 6 mit einerseits den Tragrahmen 4 und andererseits den Statorgehäuse 3 angeordnet.

Die Befestigung der Federstützen 6 mit dem Statorgehäuse 3 kann über ein Befestigungselement 10 erfolgen.

Die Federstützen 6 weisen hierzu einen ersten Endbereich 11 auf, der mit dem Befestigungselement 10 verbunden ist. Weiterhin weist die Federstütze 6 einen zweiten Endbereich 12 auf, der mit dem Tragrahmen 4 verbunden ist. Die Befestigung der Federstützen 6 kann über entsprechende Schraub- und/oder Klemmverbindungen erfolgen. Hierbei ist darauf zu achten, dass eine entsprechende Ausrichtung der Längsachsen der Federstützen 6 mit der Drehachse der Welle 9 derart erfolgen kann, dass sich die Längsachsen der auf beiden Seiten der Antriebsmaschine 2 V-förmig angeordneten Federstützen 6 gemeinsam auf der Drehachse der Welle 9 schneiden.

An dem Statorgehäuse 3 ist ein Ansatz 13 vorgesehen. Mit diesem Ansatz steht eine Verbindungsstange 14 in Kontakt, die wiederum mit einer Kraftmessdose 5 in Verbindung steht. Die andere Seite der Kraftmessdose 5 ist über ein entsprechendes Verbindungsstück 16 mit einer Rahmenbefestigung 15 verbunden. Die Verbindung der Verbindungsstange 14 mit dem Ansatz 13 ist hierbei derart gestaltet, dass nur Kräfte in Längsrichtung der Verbindungsstange 14 übertragen werden könne. Das Gleiche gilt für die Verbindung zwischen der Rahmenbefestigung 15 und dem Verbindungsstück 16.

In der Figur 1 ist die zweite Laufrolle 1' zur besseren Darstellung nicht gezeigt. Die Biegestellen 7 der Federstützen 6 sind an den jeweiligen Einspannstellen beziehungsweise nahe dem ersten und dem zweiten Endbereich 11, 12 der Federstützen 6 vorgesehen. Der Tragrahmen 4 kann direkt von einem Betonfundament getragen und mit diesem verschraubt sein. Die Pendelmaschine beziehungsweise die Antriebsmaschine 2 hängt mit den Laufrollen 1 und 1' (in Figur 1 nicht dargestellt) an vier Federstützen 6. Die Kraftmessdose 5 stützt die Antriebsmaschine 2 beziehungsweise das Statorgehäuse 3 gegenüber dem Tragrahmen 4 ab. Die Angriffsrichtung der Kraftmessdose5 beziehungsweise deren Befestigungselemente sind derart ausgerichtet und ausgebildet, dass bei einer Längenänderung der Federstützen 6 die Kraftmessdose 5 keinerlei Scheindrehmornente erfasst; somit erhält die Kraftmessdose 5 bei einer Längenänderung der Federstützen keinerlei Schub- oder Druckkräfte.

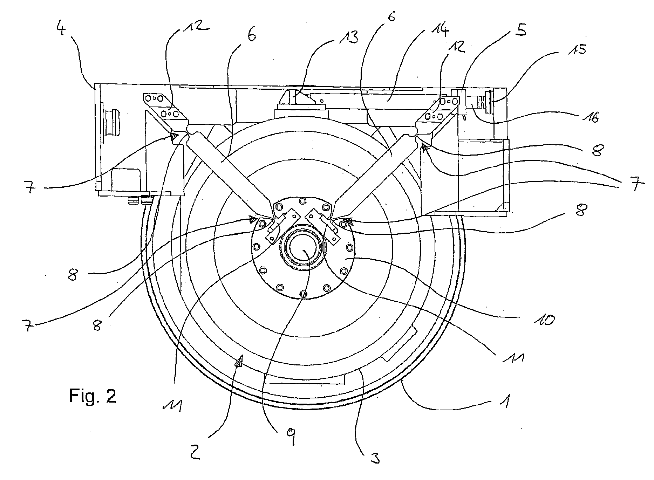

Die Figur 2 zeigt eine Draufsicht auf den Rollenprüfstand, wobei hier die beiden Federstützen 6 mit den jeweiligen zwei Biegestellen 7 und den zugehörigen Verjüngungen 8 gut sehen sind.

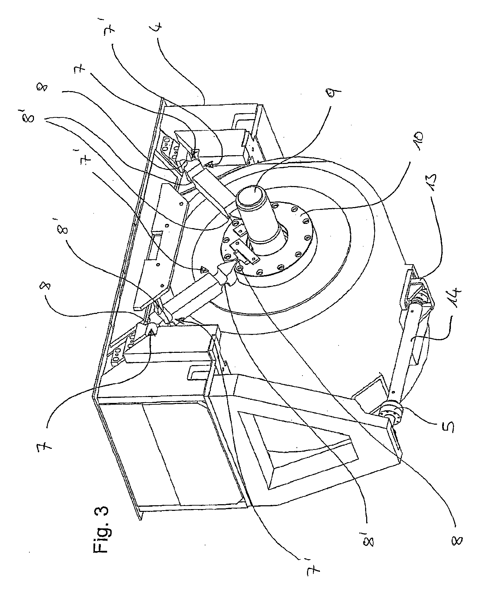

Die Figur 3 zeigt eine Anordnung der Kraftmessdose 5 auf der Unterseite des Statorgehäuses 3 beziehungsweise der Antriebsmaschine 2. Weiterhin ist in der Figur 3 eine zur Figur 2 andere Seite der Antriebsmaschine 2 dargestellt. Die Federstützen 6 weisen hierbei zwei zusätzliche Biegestellen 7' mit entsprechenden Verjüngungen 8' auf. Die in der Figur 3 gezeigten Federstützen 6 sind folglich mit vier Biegestellen 7, 7' versehen, die jeweilig eine Verjüngung 8, 8' aufweisen. Die in der Figur 3 gezeigten Federstützen 6 sind durch die zusätzlichen Biegestellen 7' in der Lage Axialverschiebungen beziehungsweise Längenänderungen in Axialrichtung der Antriebsmaschine 2 auszugleichen. Derartige Längenänderungen können beispielsweise auf Temperaturänderungen zurückzuführen sein, beispielsweise aufgrund einer Erwärmung der Antriebsmaschine 2 im Betrieb des Prüfstands.

Wie beispielsweise in der Figur 3 dargestellt, erstrecken sich die Verjüngungen 8 im Wesentlichen parallel zur Drehachse der Welle 9 um eine Drehbewegung des Statorgehäuses 3 zu ermöglichen. Die Verjüngungen 8' der zusätzlichen Biegestellen 7' hingegen verlaufen im Wesentlichen 90° dazu in tangentialer Richtung zur Drehrichtung der Welle 9 um eine Axialbewegung des Befestigungselements 10 zu erlauben.

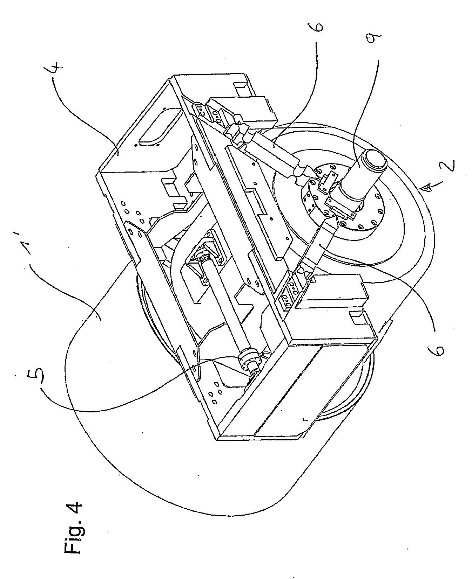

Die Figur 4 zeigt eine Darstellung des Prüfstand mit einer angeordneten Laufrolle 1'. Weiterhin ist ebenso wie in der Figur 3 die Seite der Antriebsmaschine 2 mit einer angeordneten Laufrolle 1 dargestellt, die die zusätzlichen Biegestellen 7' aufweist um die vorgenannte Axiallängung durch Temperaturänderungen zu erlauben.

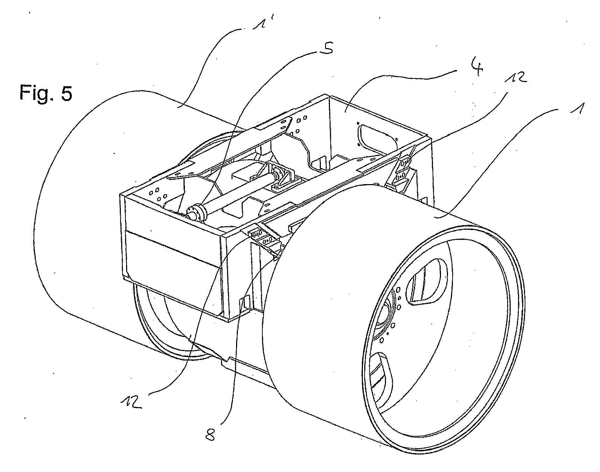

Die Figur 5 zeigt den Prüfstand mit beiden angeordneten Laufrollen 1, 1'.

## Patentansprüche

1. Rollenprüfstand für Kraftfahrzeuge mit
- zumindest einer Laufrolle (1, 1') für zumindest ein Rad eines Fahrzeugs,
- einer Antriebsmaschine (2) zum direkten Antreiben der Laufrolle (1, 1'), wobei die Antriebsmaschine (2) ein Statorgehäuse (3) aufweist,
- einem Tragrahmen (4), in dem das Statorgehäuse (3) pendelnd gelagert ist, wobei sich das Statorgehäuse (3) über Messmittel (5} an dem Tragrahmen (4) abstützt,
**dadurch gekennzeichnet, dass**
das Statorgehäuse (3) über zumindest zwei Federstützen (6) mit dem Tragrahmen (4) verbunden ist, wobei die Federstützen (6) jeweils zumindest eine Biegestelle (7, 7') aufweisen,
die Biegestelle (7) derart ausgebildet ist, dass sie gegenüber einer Kraft hervorgerufen bspw. durch eine Verdrehung des Statorgehäuses (3) um eine Drehachse einer Welle (9) der Antriebsmaschine (2) elastisch und gegenüber anderen Kräften stabil ausgebildet ist, und
die Biegestelle (7, 7') eine Verjüngung (8,8') aufweist.

2. Rollenprüfstand nach zumindest einem der Anspruch 1, **dadurch gekennzeichnet, dass** die Federstütze (6) zumindest zwei Biegestellen (7) aufweist.

3. Rollenprüfstand nach zumindest einem der Ansprüche 1 bis 2, **dadurch gekennzeichnet, dass** sich die Verjüngung (8) im wesentlichen parallel zur Drehachse einer Welle (9) der Antriebsmaschine (2) erstreckt.

4. Rollenprüfstand nach zumindest einem der Ansprüche 1 bis 3, **dadurch gekennzeichnet, dass** die Biegestellen (7, 7') nahe von Befestigungsstellen (10) der Federstütze (6) vorgesehen sind.

5. Rollenprüfstand nach zumindest einem der Ansprüche 1 bis 4, **dadurch gekennzeichnet, dass** zumindest eine der Federstützen (6) auf einer Seite des Tragrahmens (4) zusätzliche Biegestellen (7') aufweisen, um einen Längenausgleich der Antriebsmaschine (2) in Axialrichtung zu ermöglichen.

6. Rollenprüfstand nach Anspruch 5, **dadurch gekennzeichnet, dass** die zusätzliche Biegestelle (7') derart ausgebildet ist, dass sie gegenüber einer Kraft in Axialrichtung der Welle (9) der Antriebsmaschine (2) elastisch ausgebildet ist.

7. Rollenprüfstand nach Anspruch 5 oder 6, **dadurch gekennzeichnet, dass** die zusätzliche Biegestelle (7') eine Verjüngung (8') aufweist.

8. Rollenprüfstand nach zumindest einem der Ansprüche 5 bis 7, **dadurch gekennzeichnet, dass** sich die Verjüngungen (8') der zusätzlichen Biegestellen (7') im wesentlichen tangential zur Drehrichtung der Welle (9) erstrecken.

9. Rollenprüfstand nach zumindest einem der Ansprüche 1 bis 8, **dadurch gekennzeichnet, dass** die Messmittel (5) 90° zu einer möglichen Störgrösse bzw. Störbewegung angeordnet sind, wobei nur Kräfte in Messrichtung aufgenommen werden.

10. Rollenprüfstand nach zumindest einem der Ansprüche 1 bis 9, **dadurch gekennzeichnet, dass** die Federstützen (6) das Statorgehäuse (3) hängend und/oder stehend lagern.

11. Rollenprüfstand nach zumindest einem der Ansprüche 1 bis 10, **dadurch gekennzeichnet, dass** auf jeder Seite des Tragrahmens (4) zwei Federstützen (6) vorgesehen sind, wobei jede Federstütze (6) auf jeder Seite zwei Biegestellen (7) und jede Federstütze (6) auf einer Seite zwei zusätzliche Biegestellen (7') aufweisen.

12. Rollenprüfstand nach zumindest einem der Ansprüche 1 bis 11, **dadurch gekennzeichnet, dass** die Federstützen (6) einen beliebigen Winkel zueinander aufweisen.

13. Rollenprüfstand nach zumindest einem der Ansprüche 1 bis 12, **dadurch gekennzeichnet, dass** die Federstützen (6) einen Winkel von 90° zueinander aufweisen, wobei die Winkelhalbierende in Vertikalrichtung angeordnet ist und die Kraftmessdose (5) senkrecht zur Winkelhalbierenden bzw. horizontal angeordnet ist.

## Claims

1. A roller-type test stand for motor vehicles, comprising:
- at least one roller (1, 1') for at least one wheel of a motor vehicle,
- a drive motor (2) for directly driving the roller (1, 1'),
wherein the drive motor (2) comprises a stator housing (3),
- a support frame (4) in which the stator housing (3) is mounted in a pendulating manner,
said stator housing (3) resting on the support frame (4) by measuring means (5), **characterized in that**
the stator housing (3) is connected to the support frame (4) by means of at least two spring supports (6), said spring supports (6) each having at least one bending point (7, 7'),
the bending point (7) being configured such that it is generated against a force, for example by rotating the stator housing (3) about a rotational axis of a shaft (9) of the drive motor (2), so as to be elastic and stable to other forces, and
the bending point (7, 7') has a tapering (8, 8').

2. The roller-type test stand according to at least one of claim 1, **characterized in that** the spring support has at least two bending points (7).

3. The roller-type test stand according to at least one of claims 1 to 2, **characterized in that** the tapering (8) substantially extends parallel to the rotational axis of a shaft (9) of the drive motor (2).

4. The roller-type test stand according to at least one of claims 1 to 3, **characterized in that** the bending points (7, 7') are provided in the vicinity of fixation points (10) of the spring support (6).

5. The roller-type test stand according to at least one of claims 1 to 4, **characterized in that** at least one of the spring supports (6) has additional bending points (7') on one side of the support frame (4) to enable a length adjustment of the drive motor (2) in the axial direction.

6. The roller-type test stand according to claim 5, **characterized in that** the additional bending point (7') is formed so as to be elastic to a force in the axial direction of the shaft (9) of the drive motor (2).

7. The roller-type test stand according to claim 5 or 6, **characterized in that** the additional bending point (7') has a tapering (8').

8. The roller-type test stand according to at least one of claims 5 to 7, **characterized in that** the taperings (8') of the additional bending points (7') substantially extend tangent to the rotating direction of the shaft (9).

9. The roller-type test stand according to at least one of claims 1 to 8, **characterized in that** the measuring means (5) are disposed at 90° relative to a possible disturbance quantity and disturbance movement, respectively, with only forces in the measuring direction being accommodated.

10. The roller-type test stand according to at least one of claims 1 to 9, **characterized in that** the spring supports (6) mount the stator housing (3) in a hanging and/or standing manner.

11. The roller-type test stand according to at least one of claims 1 to 10, **characterized in that** on each side of the support frame (4) two spring supports (6) are provided, each spring support (6) having two bending points (7) on each side and each spring support (6) having two additional bending points (7') on one side.

12. The roller-type test stand according to at least one of claims 1 to 11, **characterized in that** the spring supports (6) are at any desired angle relative to each other.

13. The roller-type test stand according to at least one of claims 1 to 12, **characterized in that** the spring supports (6) are at an angle of 90° relative to each other, the angle bisector being disposed in the vertical direction and the load cell (5) being disposed perpendicularly to the angle bisector and horizontally, respectively.

## Revendications

1. Banc d'essai à rouleaux pour véhicules automobiles, comportant
- au moins un rouleau tournant (1, 1') pour au moins une roue d'un véhicule,
- une machine d'entraînement (2) pour l'entraînement direct du rouleau tournant (1, 1'), la machine d'entraînement (2) comprenant un carter de stator (3),
- un cadre de support (4) dans lequel le carter de stator (3) est monté de façon pendulaire, le carter de stator (3) prenant appui sur le cadre de support (4) par l'intermédiaire de moyens de mesure (5),
**caractérisé en ce que**
le carter de stator (3) est relié au cadre de support (4) par l'intermédiaire d'au moins deux supports de suspension (6), les supports de suspension (6) présentant chacun au moins un emplacement de flexion (7, 7'), l'emplacement de flexion (7) étant réalisé de manière à être élastique par rapport à un effort, provoqué par exemple par une rotation du carter de stator (3) autour d'un axe de rotation d'un arbre (9) de la machine d'entraînement (2), et de manière à être stable par rapport à d'autres efforts,
et
l'emplacement de flexion (7, 7') présente un rétrécissement (8, 8').

2. Banc d'essai à rouleaux selon la revendication 1, **caractérisé en ce que** le support de suspension (6) comprend au moins deux emplacements de flexion (7).

3. Banc d'essai à rouleaux selon l'une au moins des revendications 1 à 2, **caractérisé en ce que** le rétrécissement (8) s'étend sensiblement parallèlement à l'axe de rotation de l'arbre (9) de la machine d'entraînement (2).

4. Banc d'essai à rouleaux selon l'une au moins des revendications 1 à 3, **caractérisé en ce que** les emplacements de flexion (7, 7') sont prévus à proximité des emplacements de fixation (10) du support de suspension (6).

5. Banc d'essai à rouleaux selon l'une au moins des revendications 1 à 4, **caractérisé en ce que** l'un des supports de suspension (6) présente des emplacements de flexion (7') supplémentaires sur un côté du cadre de support (4), afin de permettre une compensation en longueur de la machine d'entraînement (2) en direction axiale.

6. Banc d'essai à rouleaux selon la revendication 5, **caractérisé en ce que** l'emplacement de flexion (7') supplémentaire est réatisé de manière à être élastique en direction axiale de l'arbre (9) de la machine d'entraînement (2) par rapport à un effort.

7. Banc d'essai à rouleaux selon la revendication 5 ou 6, **caractérisé en ce que** l'emplacement de flexion (7') supplémentaire présente un rétrécissement (8').

8. Banc d'essai à rouleaux selon l'une au moins des revendications 5 à 7, **caractérisé en ce que** les rétrécissements (8') des emplacements de flexion (7') supplémentaires s'étendent sensiblement tangentiellement par rapport à la direction de rotation de l'arbre (9).

9. Banc d'essai à rouleaux selon l'une au moins des revendications 1 à 8, **caractérisé en ce que** les moyens de mesure (5) sont agencés à 90° par rapport à une grandeur de perturbation possible ou à un mouvement de perturbation possible, seuls des efforts en direction de mesure étant détectés.

10. Banc d'essai à rouleaux selon l'une au moins des revendications 1 à 9, **caractérisé en ce que** les supports de suspension (6) supportent le carter de stator (3) en suspension et/ou en appui.

11. Banc d'essai à rouleaux selon l'une au moins des revendications 1 à 10, **caractérisé en ce qu'**il est prévu deux supports de suspension (6) sur chaque côté du cadre de support (4), chaque support de suspension (6) présentant sur chaque côté deux emplacements de flexion (7) et chaque support de suspension (6) présentant sur un côté deux emplacements de flexion (7') supplémentaires.

12. Banc d'essai à rouleaux selon l'une au moins des revendications 1 à 11, **caractérisé en ce que** les supports de suspension (6) présentent un angle quelconque l'un par rapport à l'autre.

13. Banc d'essai à rouleaux selon l'une au moins des revendications 1 à 12, **caractérisé en ce que** les supports de suspension (6) présentent un angle de 90° l'un par rapport à l'autre, la bissectrice étant disposée en direction verticale et la boîte dynamométrique (5) étant disposée perpendiculairement à la bissectrice ou horizontalement.
